Europäisches Patentamt

European Patent Office

Office européen des brevets

(11) Veröffentlichungsnummer: **0 301 177 B1**

(12) **EUROPÄISCHE PATENTSCHRIFT**

(45) Veröffentlichungstag der Patentschrift: **04.03.92**

(21) Anmeldenummer: **88106657.5**

(22) Anmeldetag: **26.04.88**

(51) Int. Cl.⁵: **A01D  45/02**

(54) **Erntevorsatz an Felhäckslern.**

(30) Priorität: **27.07.87 DE 3724798**

(43) Veröffentlichungstag der Anmeldung:
**01.02.89 Patentblatt  89/05**

(45) Bekanntmachung des Hinweises auf die
Patenterteilung:
**04.03.92 Patentblatt  92/10**

(84) Benannte Vertragsstaaten:
**AT BE FR GB IT NL**

(56) Entgegenhaltungen:
**EP-A- 0 106 385**
**FR-A- 2 532 517**

(73) Patentinhaber: **Karl Mengele & Söhne, Maschinenfabriken GmbH & Co.
Augsburger Strasse 50
W-8870 Günzburg(DE)**

(72) Erfinder: **Nusser, Martin
Falkensteinstrasse 4
W-7908 Niederstotzingen(DE)**

(74) Vertreter: **Kahler, Kurt, Dipl.-Ing.
Patentanwälte Kahler & Käck Gerberstrasse
3 Postfach 1249
W-8948 Mindelheim(DE)**

Rank Xerox (UK) Business Services

## Beschreibung

Die Erfindung betrifft einen Erntevorsatz an Feldhäckslern nach den oberbegrifflichen Merkmalen des Patentanspruches 1.

Ein derartiger Erntevorsatz ist aus der DE-OS 32 33 122 bekannt. Hierbei werden zur Reduzierung der Transportbreite auf die zulässige Höchstbreite von drei Metern auf öffentlichen Straßen die beiden äußeren Förderkanäle mitsamt ihren Förderorganen quer zur Fahrtrichtung hochgeschwenkt. Dieses Hochklappen bedingt jedoch wegen des hohen Gewichts eine hydraulische Betätigung auf beiden Seiten sowie eine Trennung bzw. Kupplung der Antriebselemente. Neben dem zusätzlichen Bauaufwand für den stabilen Hochklappmechanismus und die beidseitigen Kupplungsteile können sich auch Probleme beim Wiedereinkuppeln ergeben, wenn das Mitnehmerprofil und Gegenprofil der beiden Kupplungshälften nicht übereinstimmen.

Außerdem bilden die hochgeklappten Teile und die äußeren Halmteilerhälften in den zu Radfahrern und zum Gegenverkehr hingelegenen Eckbereichen sehr scharfe Spitzen aus, die für den Straßentransport eine aufwendige mehrteilige Schutzabdeckung verlangen.

Desweiteren erlaubt dieser Erntevorsatz keine Anpassung an unterschiedliche Reihenweiten des Erntegutes, da die gezeigte Hochklappbewegung um eine in Fahrtrichtung weisende Achse einen konstanten Halmteilerabstand benötigt.

Demzufolge liegt der Erfindung die Aufgabe zugrunde, eine Möglichkeit der schnellen, sicheren und einfachen Reduzierung der Transportbreite von überbreiten Erntevorsätzen an Feldhäckslern anzugeben und zugleich bei Bedarf eine einfache Anpassung an die Reihenabstände des Erntegutes zu ermöglichen.

Diese Aufgabe wird durch die kennzeichnenden Merkmale des Anspruchs 1 gelöst.

Vorteilhaft bei der vorgeschlagenen Ausführung ist die Bewegung der relativ schweren Förderorgane in einer etwa horizontalen Ebene, so daß ohne Hochheben von Bauteilen des Erntevorsatzes beim erfindungsgemäßen Erntevorsatz die Breitenreduzierung sogar allein durch die Bedienperson oder einfache, leicht bauende Betätigungsvorrichtungen wie z.B. eine Verstellspindel durchgeführt werden kann. Dabei müssen keine Antriebsteile gelöst oder getrennt werden, so daß die Breitenverstellung schnell und sicher vonstatten geht. Außerdem bilden die zusammengeklappten Halmteiler eine nach vorne hin abgeschrägte, relativ kompakte Baueinheit ohne scharfe Spitzen und Kanten im Eckbereich.

Weiterhin erlaubt diese Ausführung eine sehr schnelle Anpassung der Förderkanalabstände an den Reihenabstand der Maispflanzen. Bei der Ausführung mit z.B. hydraulischer Betätigung der Tragarmverstellung ist dies sogar während der Fahrt auf dem Felde durch Fernbedienung möglich.

Weitere vorteilhafte Ausgestaltungen sind Gegenstand der Unteransprüche und der Beschreibung.

In der Zeichnung ist ein Ausführungsbeispiel der Erfindung in schematischer Darstellung gezeigt und nachfolgend näher beschrieben. Es zeigt:

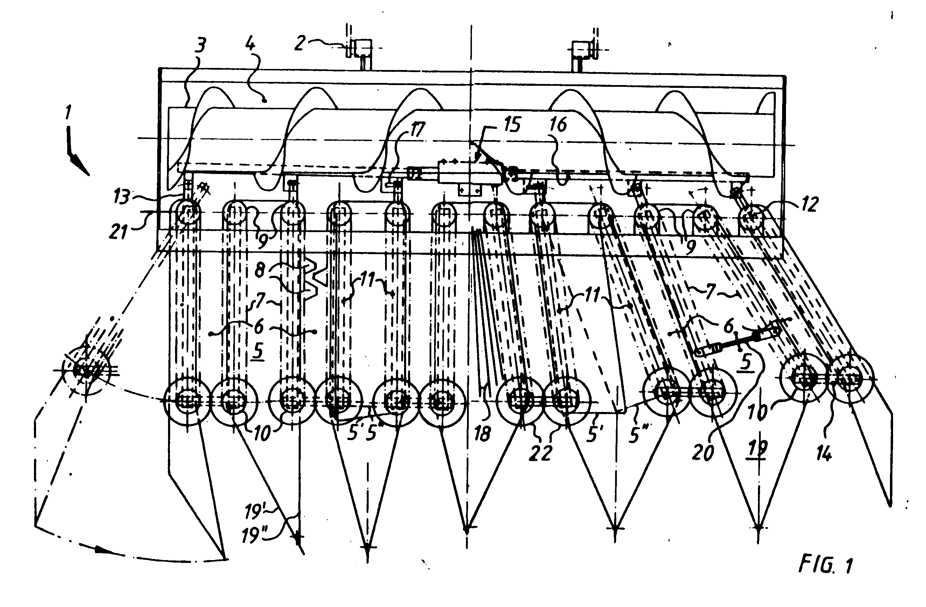

Fig. 1     einen Erntevorsatz in Draufsicht in Arbeits- und in Transportstellung.

Der in Fig. 1 dargestellte Erntevorsatz 1 wird mittels der Anschlußvorrichtung 2 an einen nicht dargestellten Feldhäcksler angekuppelt. Zum seitlichen Zusammenfassen des Erntegutes wird hier eine Förderschnecke 3 verwendet, die in einer Trogwanne 4 umläuft. Der vordere Bereich der Trogwanne 4 dient der Befestigung der nach vorne weisenden Bauteile des Erntevorsatzes. Hier bilden z.B. fünf Halmteiler 5 und zwei schmälere, nicht näher bezeichnete Randabteiler insgesamt sechs Förderkanäle 6.

Auf der rechten Hälfte der Fig. 1 sind die Halmteiler 5, Förderkanäle 6 und Förderorgane 7 in der auseinandergefächerten Arbeitsstellung und auf der linken Hälfte in der zusammengeschwenkten Transportstellung gezeigt. Die Förderorgane 7, z.B. Ketten, weisen zahnartige Mitnehmer 8 auf, die mit ihrer Umlaufbahn in den Förderkanal 6 hineinragen und von denen lediglich drei Stück dargestellt sind.

Die Förderorgane 7 laufen jeweils um ein - in Fahrtrichtung gesehen - hinteres Umlenkrad 9 und ein vorderes Umlenkrad 10 um, wobei das hintere Umlenkrad 9 hier maschinenseitig von der unterhalb der Trogwanne 4 verlaufenden Antriebswelle 21 über einzelne Winkelgetriebe angetrieben wird. Über die Förderkette 7 wird zugleich jeweils die mit der Welle des vorderen Umlenkrades 10 verbundene Messerscheibe 22 angetrieben, die im paarweisen Übergriff mit der benachbarten Messerscheibe 22 das Erntegut vor der Aufnahme und Weiterförderung durch die Förderorgane 7 abtrennt.

Im Innern und/oder unterhalb des als haubenförmige Abdeckung ausgebildeten Halmteilers 5 ist an dessen seitlichem Rand jeweils zwischen vorderem und hinterem Umlenkrad 10 und 9 ein Tragarm 11 schraffiert eingezeichnet. Dieser ist jeweils bei dem hinteren Umlenkrad 9 direkt oder über Zwischenträger wie dem Winkelgetriebe in einer horizontalen Ebene schwenkbar an der Trogwanne 4 gelagert und ragt wie ein Kragarm frei nach vorne, um an seinem vorderen Ende die Lagerung für das vordere Umlenkrad 10 und hier die Messerscheibe 22 zu tragen. Durch die Schwenkbarkeit des Tragarmes 11 um die Achse 12 des hinteren Umlenkrades 9 bleibt bei dem fächerartigen Verschwenken der Tragarme 11 zusammen mit den Förderorganen 7, deren Kettenspannung konstant.

In Verlängerung des Tragarmes 11 ist hier nach Art eines zweiarmigen Hebels jeweils ein nach hinten gerichteter Schwenkhebelarm 13 vorgesehen, der durch Verschwenken z.B. mittels der Betätigungsvorrichtung 15, den Tragarm 11 zusammen mit den Förderorganen 7 verschwenkt. Zur Mitnahme des zweiten Förderorgans 7 an der anderen Seite des Förderkanals 6 ist hier ein Koppelarm 14 vorgesehen, der unterhalb der Messerscheibe 22 angeordnet ist. Dadurch wird die Parallelität der beiden, jeweils einen Förderkanal 6 bildenden Förderorgane gewährleistet. Der Koppelarm 14 kann dabei, in Fahrzeuglängsrichtung gesehen, an beliebiger Stelle zwischen den beiden Tragarmen 11 angeordnet sein.

Die Betätigungsvorrichtung 15 ist hier durch einen unterhalb der Trogwanne 4 angeordneten Hydraulikzylinder gebildet, der ein Gestänge 16 quer zur Fahrtrichtung verschiebt und damit eine Breitenänderung des Erntevorsatzes 1 bzw. eine Abstandsänderung zwischen den einzelnen Förderkanälen 6 bewirkt.

Ebenso könnte die Betätigungsvorrichtung 15 durch eine von Hand oder motorisch drehbare Spindel gebildet werden, wie dies für die Ausführung mit direkter Betätigung der Tragarme 11 als Verstelleinrichtung 20 angedeutet ist.

Das Gestänge 16 weist hier für die Verschwenkung aller Förderorgane 7 durch nur einen Hydraulikzylinder Langlöcher 17 auf, um die unterschiedliche Ausrichtung der Förderkanäle 6 auszugleichen, und in denen z.B. Bolzen der Schwenkhebelarme 13 eingreifen und eingepaßt sind, so daß die Förderorgane 7 sowohl in Arbeits- als auch in Transportstellung arretiert sind.

Ebenso könnten zwei Gestänge 16 vorgesehen sein als Ersatz der sechs Koppelarme 14 oder mehrere Betätigungsvorrichtungen 15 für das getrennte Schwenken einzelner Förderorgane.

Da die Halmteiler 5 statt ihrer gemäß dem Stand der Technik gleichbleibenden Form nunmehr beim Verschwenken in eine geringere Breite besonders in ihrem vorderen Bereich schmaler werden, wird dem durch geteilte, übereinander schiebbare Haubenhälften 5′ und 5″ Rechnung getragen. Es kann auch eine flexible Abdeckung 18 wie z.B. eine Kunststoffplane zwischen den beiden Randbereichen des Halmteilers 5 vorgesehen sein. Ebenso wie die Halmteiler 5 verändern auch die Halmteilerspitzen 19 beim Verschwenken ihre Breite, so daß diese ebenso aus zwei gelenkig verbundenen Hälften 19′ und 19″ bestehen kann.

**Patentansprüche**

1. Erntevorsatz an Feldhäckslern zum Aufnehmen und Weiterführen von stengeligem Erntegut, insbesondere Mais, mit mehreren durch Halmteiler seitlich begrenzten Förderkanälen, die in Fahrtrichtung schräg auseinander verlaufend ausgebildet sind und jeweils von Mitnehmern zugeordneter Förderorgane durchlaufen sind, wobei die Förderorgane um in Fahrtrichtung vordere und hintere Umlenkräder umlaufen, dadurch gekennzeichnet, daß die vorderen Umlenkräder (10) jeweils einzeln über einen Tragarm (11) mit den hinteren Umlenkrädern (9) verbunden sind und zusammen mit den Förderorganen (7) jeweils um die aufrechte Achse (12) des hinteren Umlenkrades (9) schwenkbar gelagert sind.

2. Erntevorsatz nach Anspruch 1, dadurch gekennzeichnet, daß wenigstens ein Förderorgan (7) pro Förderkanal (6) einen mit dem Tragarm (11) verbundenen Schwenkhebelarm (13) aufweist.

3. Erntevorsatz nach Anspruch 2, dadurch gekennzeichnet, daß pro Förderkanal (6) lediglich ein Förderorgan (7) einen Schwenkhebelarm (13) aufweist und die beiden Förderorgane (7) pro Förderkanal (6) parallelogrammartig mittels eines Koppelarms (14) gelenkig verbunden sind.

4. Erntevorsatz nach Anspruch 2, dadurch gekennzeichnet, daß beide Förderorgane (7) pro Förderkanal (6) jeweils einen Schwenkhebelarm (13) aufweisen.

5. Erntevorsatz nach Anspruch 3, dadurch gekennzeichnet, daß der Koppelarm (14) nahe der vorderen Umlenkräder (10) angeordnet ist.

6. Erntevorsatz wenigstens nach Anspruch 2, dadurch gekennzeichnet, daß die Schwenkhebelarme (13) über eine Betätigungsvorrichtung (15) verschwenkbar sind.

7. Erntevorsatz wenigstens nach Anspruch 2, dadurch gekennzeichnet, daß alle Schwenkhebelarme (13) gemeinsam über eine Betätigungsvorrichtung (15) verschwenkbar sind.

8. Erntevorsatz wenigstens nach Anspruch 2, dadurch gekennzeichnet, daß die Betätigungsvorrichtung (15) von einem hydraulisch beaufschlagten Gestänge (16) gebildet ist.

9. Erntevorsatz nach Anspruch 8, dadurch gekennzeichnet, daß das Gestänge (16) zum Ausgleich der unterschiedlichen Schwenkwinkel Langlöcher (17) aufweist.

10. Erntevorsatz nach Anspruch 1, dadurch gekennzeichnet, daß die Halmteiler (5) aus übereinanderschiebbaren Haubenhälften (5′, 5″) bestehen.

11. Erntevorsatz nach Anspruch 1, dadurch gekennzeichnet, daß die Halmteiler (5) eine flexible Abdeckung (18) aufweisen.

12. Erntevorsatz nach Anspruch 1, dadurch gekennzeichnet, daß die Halmteilerspitzen (19) aus an ihrer Spitze gelenkig verbundenen Hälften (19′, 19″) bestehen.

13. Erntevorsatz nach Anspruch 1, dadurch gekennzeichnet, daß jeweils zwischen zwei Förderorganen (7) eines Halmteilers (5) eine Verstelleinrichtung (20) vorgesehen ist.

## Claims

1. Harvesting attachment for forage harvesters for picking-up and conveying of stalky fodder, particularly maize, including several conveying channels laterally bound by stalk dividers, formed obliquely diverging in driving direction and having moved therein engaging elements of associated conveying means with the conveying means circulating around front and rear deflecting wheels,
characterized in that,
the front deflecting wheels (10) are connected individually each to the rear deflecting wheels (9) by a support arm (11) and are supported pivotably each together with the conveying means (7) around the upright axis (12) of the rear deflecting wheel (9).

2. Harvesting attachment according to claim 1, characterized in that at least one conveying means (7) of each conveying channel (6) is provided with a swivel lever arm (13) connected to the support arm (11).

3. Harvesting attachment according to claim 2, characterized in that only one conveying means (7) of each conveying channel (6) is provided with a swivel lever arm (13) and both conveying means (7) of each conveying channel (6) are connected in a parallelogram-type manner by a coupling arm (14).

4. Harvesting attachment according to claim 2, characterized in that both conveying elements (7) of each conveying channel (6) are provided with a swivel lever arm (13) each.

5. Harvesting attachment according to claim 3, characterized in that the coupling arm (14) is arranged near the front deflecting wheels (10).

6. Harvesting attachment at least according to claim 2, characterized in that the swivel lever arms (13) are pivotable by an actuating means (15).

7. Harvesting attachment at least according to claim 2, characterized in that all swivel lever arms (13) are pivotable in common by an actuating device (15).

8. Harvesting attachment at least according to claim 2, characterized in that the actuating device (15) is formed by a hydraulically actuated linkage (16).

9. Harvesting attachment according to claim 8, characterized in that the linkage (16) comprises slots (17) for compensating different pivoting angles.

10. Harvesting attachment according to claim 1, characterized in that the stalk dividers (5) consist of telescopable hood-halves (5', 5'').

11. Harvesting attachment according to claim 1, characterized in that the stalk dividers (5) are provided with a flexible cover (18).

12. Harvesting attachment according to claim 1, characterized in that the stalk divider tips (19) consist of halves (19, 19'') being hinged together at their tips.

13. Harvesting attachment according to claim 1, characterized in that an adjusting device (20) is provided between two conveying means (7) of each stalk divider (5).

## Revendications

1. Appareil de récolte adaptable sur l'avant de ramasseuses-hacheuses, destiné à ramasser et acheminer un produit récolté à tige, en particulier du maïs, comprenant plusieurs canaux d'alimentation délimités latéralement par des diviseurs de chaumes et orientés de manière à s'écarter obliquement les uns des autres dans le sens de marche, qui sont parcourus chacun d'éléments d'amenée d'organes d'alimentation coordonnés circulant autour de roues de renvoi situées respectivement à l'avant et à l'arrière dans le sens de marche, caractérisé en ce que les roues de renvoi avant (10) sont reliées individuellement par un bras porteur (11) à une roue de renvoi arrière (9) et sont montées chacune pivotantes, ensemble avec les organes d'alimentation (7), autour de l'axe vertical (12) de la roue de renvoi arrière (9).

2. Appareil de récolte selon la revendication 1, caractérisé en ce qu'au moins un organe d'alimentation (7) par canal d'alimentation (6) présente un bras de pivotement (13) relié au bras porteur (11).

3. Appareil de récolte selon la revendication 2, caractérisé en ce que seulement un organe d'alimentation (7) par canal d'alimentation (6) présente un bras de pivotement et les deux organes d'alimentation (7) de chaque canal d'alimentation (6) sont reliés de façon articulée entre eux, à la façon d'un parallélogramme, au moyen d'une bielle (14).

4. Appareil de récolte selon la revendication 2, caractérisé en ce que les deux organes d'alimentation (7) de chaque canal d'alimentation (6) présentent un bras de pivotement (13).

5. Appareil de récolte selon la revendication 3, caractérisé en ce que la bielle (14) est placée près des roues de renvoi avant (10).

6. Appareil de récolte selon au moins la revendication 2, caractérisé en ce que les bras de pivotement (13) peuvent être animés de mouvements de pivotement au moyen d'un dispositif de commande (15).

7. Appareil de récolte selon au moins la revendication 2, caractérisé en ce que tous les bras de pivotement (13) peuvent être animés collectivement de mouvements de pivotement par un dispositif de commande (15).

8. Appareil de récolte selon au moins la revendication 2, caractérisé en ce que le dispositif de commande (15) est formé par une barre (16) manoeuvrée hydrauliquement.

9. Appareil de récolte selon la revendication 8, caractérisé en ce que la barre (16) présente des trous oblongs (17) pour la compensation des différents angles de pivotement.

10. Appareil de récolte selon la revendication 1, caractérisé en ce que les diviseurs de chaumes (5) sont formés de demi-capots (5', 5") pouvant glisser l'un par-dessus l'autre.

11. Appareil de récolte selon la revendication 1, caractérisé en ce que les diviseurs de chaumes (5) présentent un recouvrement souple (18).

12. Appareil de récolte selon la revendication 1, caractérisé en ce que les pointes (19) des diviseurs de chaumes sont formées de moitiés (19', 19") reliées entre elles de façon articulée à leur pointe.

13. Appareil de récolte selon la revendication 1, caractérisé en ce qu'un dispositif de réglage (20) est prévu chaque fois entre deux organes d'alimentation (7) d'un diviseur de chaumes (5).

FIG. 1

EP 0 301 177 B1